# EUROPEAN PATENT APPLICATION

(11) **EP 1 978 652 A1**
(43) Date of publication of application: **08.10.2008**
(21) Application number: 06715554.9
(22) Date of filing: 10.03.2006
(51) Int. Cl.: H04B 7/26, H04M 3/56, H04Q 7/38

(54) **PoC DATA TRANSMITTING METHOD, PoC TELEPHONE COMMUNICATION SYSTEM AND APPARATUS**

(30) Priority: 27.01.2006 JP 2006019411
(71) Applicant: MATSUSHITA ELECTRIC INDUSTRIAL CO., LTD., Osaka 571-8501 (JP)
(72) Inventor: SAITO, Jun'ya Matsushita Electric Industrial Co.,Ltd., 2-1-61, Shiromi, Chuo-ku Osaka 540-6207 (JP)
(74) Representative: Grünecker, Kinkeldey, Stockmair & Schwanhäusser Anwaltssozietät
(86) International application number: PCT/JP2006/304784
(87) International publication number: WO 2007/086151

(57) **Abstract**

A PoC data transmitting method of distributing attached data used to realize a PoC attached function in conformity with a PoC protocol is provided. A PoC data transmitting method includes a first step of attaching attached data (set information) to a first message that is transmitted to a PoC server from a transmitter side terminal (PoC client 1) based on a PoC protocol, and transmitting the set information as well as the first message to the PoC server from the PoC client 1, and a second step of attaching the set information to a second message that is transmitted to one or plural receiver side terminals (PoC clients 2,3) from the PoC server that received the first message based on the PoC protocol, and transmitting the set information as well as the second message to the PoC clients 2,3 from the PoC server. According to this PoC data transmitting method, the attached data can be transmitted by utilizing the message transmitted according to the PoC protocol, and a PoC attached function can be realized.

## Description

### Technical Field

The present invention relates to a PoC data transmitting method of distributing attached data in conformity with a PoC (Push-to-Talk over Cellular) protocol and a system and a device for implementing the method and, more particularly, the technology to realize an attached function of a PoC talking by distributing attached data.

### Background Art

The transceiver and the industrial radio set have a PTT (Push-to-Talk) function via which the user speaks while pushing the talk button provided to the terminal and outputs the speech contents sent from other speakers by the voice while releasing this button. It is a PoC that is the cellular phone that can implement this PTT function.

The cellular phone having a PoC function can hold a PoC-communication with one or plural destinations through a half duplex communication via a PoC server when the user selects one or plural called persons from a phone book, for example, and then pushes/releases a dedicated talk button provided to the cellular phone.

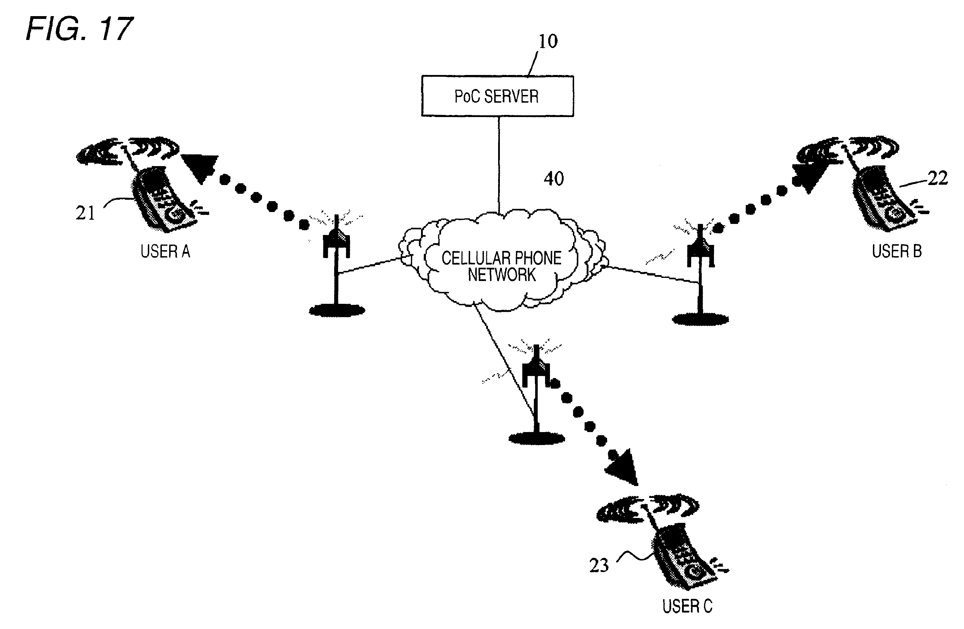

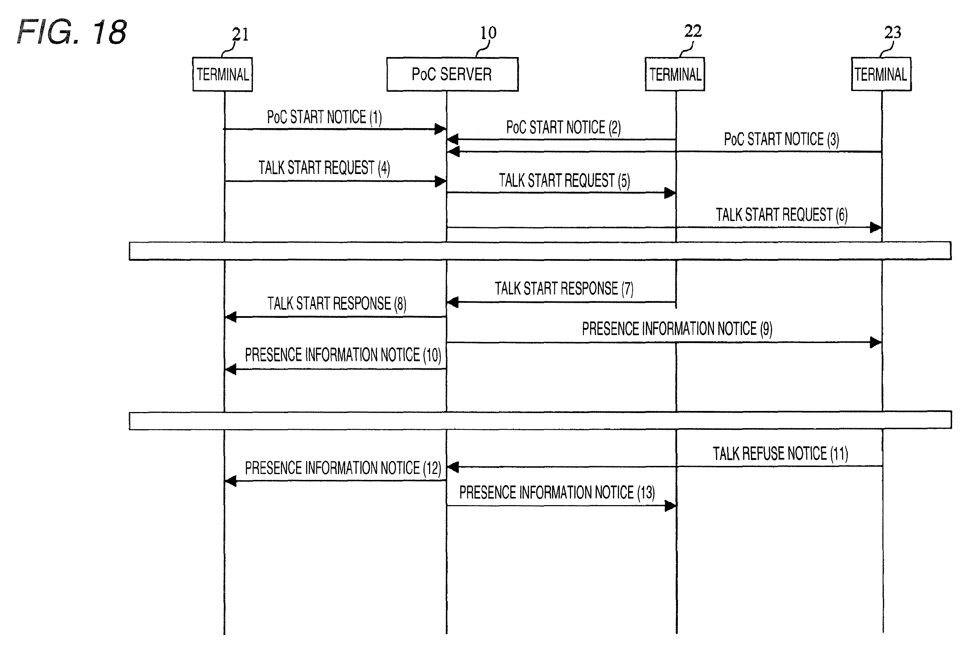

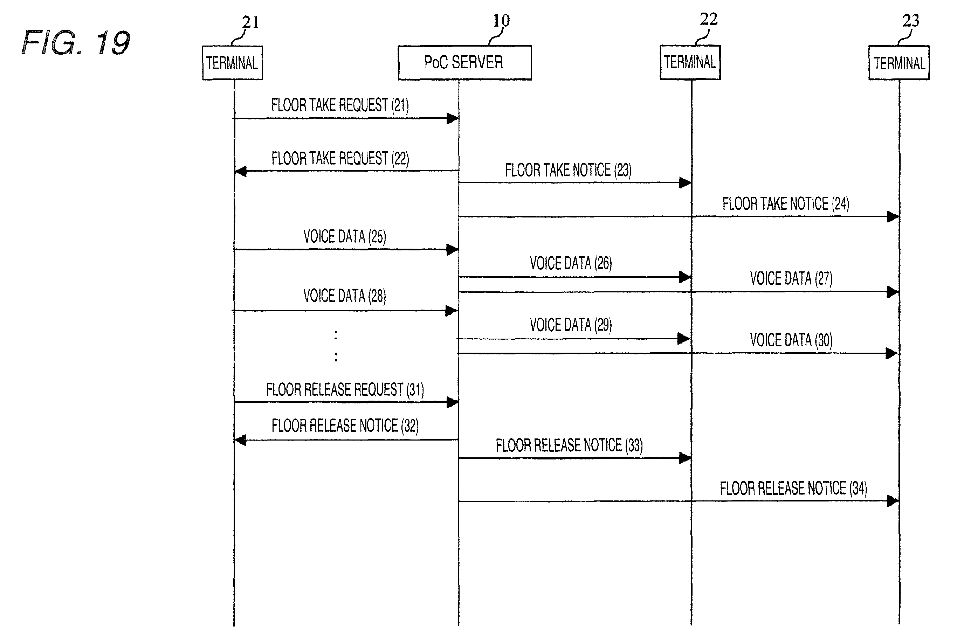

FIG.17 shows a conceptual view of the PoC system, FIG.18 shows sequences applied in opening the session in the PoC system, and FIG.19 shows sequences applied in getting the floor in the PoC system. This system is constructed by mobile terminals 21, 22, 23 equipped with the PTT function, a PoC server 10 having a PoC controlling function, and a cellular phone network 40.

The PoC server 10 executes functions such as session processes using the SIP (Session Initiation Protocol)(for example, open, change, close of the SIP session, etc.), floor control, etc. as the PoC controlling function.

The terminals 21, 22, 23 hold the session under control of the PoC server 10, and then only the terminal that obtains the floor from the PoC server 10 transmits voice data. Other terminals execute only the process of outputting the received voice data until they obtain the floor.

FIG.18 shows sequences applied when the session among the terminals 21, 22, 23 is opened in answer to the SIP session process of the PoC server 10.

Respective terminals 21, 22, 23 give the PoC start notice (REGISTER) (1)(2)(3) previously to the PoC server 10.

When the user A selects the user B and the user C from the phone book of the terminal 21, for example, and then pushes the send button of the terminal 21, a talk start request (4) addressed to these members is transmitted to the PoC server 10. Then, talk start request messages (5)(6) are transferred to the terminal 22 of the user B and the terminal 23 of the user C from the PoC server 10 respectively.

When the user B makes the operation in response to the talking from the terminal 22 that received the talk start request message, a talk start response (INVITE response)(7) indicating the success of request is transmitted to the PoC server 10 from the terminal 22, and then a talk start response (8) is transmitted to the terminal 21 from the PoC server 10. Also, the PoC server 10 transmits presence information notices (NOTIFY)(9)(10) indicating the attendance of the terminal 22 to the terminal 23 and the terminal 21.

When the user C makes the operation to respond to the talking from the terminal 23 that received the talk start request message, the similar procedures are carried out. In contrast, when the user C makes the operation not to respond to the talking, a talk refuse notice (BUSY)(11) is transmitted from the terminal 23 to the PoC server 10. Then, the PoC server 10 transmits presence information notices (NOTIFY)(12)(13) indicating the unattendance of the terminal 23 to the terminal 21 and the terminal 22 respectively.

Also, FIG.19 shows sequences applied when the terminals 21, 22, 23 get the floor under floor control of the PoC server 10.

In the PoC specification, as described above, the SIP protocol is used in opening/closing the session (in the case in FIG.17), and RTP (Real-time Transport Protocol) as the data transfer protocol and RTCP (RTP Control Protocol) to control the session to transmit/receive the data according to RTP are used in transferring the voice data during the talking (in the case in FIG.19). The transfer of the floor take/taken information during the PoC is carried out by using RTCP. That is, the PoC protocol contains SIP, RTP, RTCP.

When the user A who wishes to get the floor pushes the talk button of the terminal 21, the RTCP packet of a floor take request (Floor Request)(21) is transmitted to the PoC server 10 from the terminal 21. Then, the PoC server 10 that is managing the floor sends a floor take notice (Floor Grant) (22) to the terminal 21 when the floor is not granted yet, and then stores a status of the floor such that "the floor has been granted" therein and also transmits a floor taken notice (Floor Taken) (23)(24) to the terminal 22 and the terminal 23.

The user A who has acquired the floor inputs the voice from the terminal 21 while pushing the talk button. The voice data is incorporated into the RTP packets and sent to the PoC server 10 (25)(28), and then is transferred from the PoC server 10 to the terminal 22 and the terminal 23 (26)(27)(29)(30).

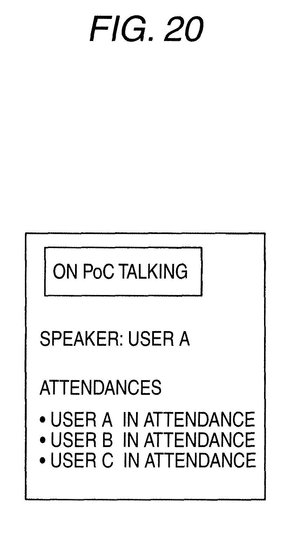

At this time, as shown in FIG.20, the display showing that "on PoC talking" and information about the speaker and the attendances are displayed on the screens of the terminals 21, 22, 23.

When the user A releases the talk button of the terminal 21, the RTCP packet of a floor release request (Floor Release) (31) is transmitted from the terminal 21 to the PoC server 10. In response to this, the PoC server 10 sends a floor release notice (Floor Idle)(32) to the terminal 21, and then updates a status of the floor to "floor not granted" and also transmits a floor release notice (Floor Idle) (33)(34) to the terminal 22 and the terminal 23.

Also, when the PoC server 10 receives the floor take request (Floor Request) during this "floor granted" period from another terminal, such server refuses this request.
Non-Patent Literature 1: Push-to-Talk over Cellular (PoC)-Architecture-2.0.8, Page 6

### Disclosure of the Invention

### Problems that the Invention is to Solve

However, the specification of the PoC system merely supports the transmission/reception of the voice data between the terminals, but this specification does not respond to the transmission/reception of data, video, sound, etc. Therefore, according to the sequence in FIG.18 and FIG.19, for example, the PoC server cannot transmit the information to designate the speakable terminal and the attend-only terminal, or the PoC server cannot transmit the icon expressing a speaker's feeling at a time of speaking to respective terminals.

If the PoC server can distribute the designation information about the speakable terminal and the attend-only terminal to respective terminals in starting the PoC talking, such the PoC server can control adequately the conversation among the groups. Also, if the PoC server can distribute the icon expressing the speaker's feeling in acquiring the floor to respective terminals, the variety of expression in the PoC talking can be broadened.

In this manner, the distribution of attached data makes an expansion of attached functions of PoC possible.

Prior to the start of the PoC talking, it is possible to transmit the data utilized in the PoC talking to the receiver side via another means such as the Internet, SMS (Short Message Service), or the like. According to these methods, the process made by the receiver side user (PoC client) to reflect contents of the received data in the PoC talking is needed, which would makes the burden heavy for the PoC client. Also, according to these data transmission methods, it is impossible to transmit the data in synchronism with a timing such as start/end of the PoC talking, acquisition of the floor, or the like, or it is impossible to utilize automatically the data at that timing.

The present invention has been made in view of such circumstances, and it is an object of the present invention to provide a PoC data transmitting method of distributing attached data used to realize a PoC attached function in conformity with a PoC protocol, and also provide a system and a device for realizing various attached functions of the PoC by implementing the method.

### Means for Solving the Problems

A PoC data transmitting method of the present invention, include a first step of attaching attached data to a first message that is transmitted to a PoC server from a transmitter side terminal based on a PoC protocol, and transmitting the attached data as well as the first message to the PoC server from the transmitter side terminal; and a second step of attaching the attached data to a second message that is transmitted to one or plural receiver side terminals from the PoC server that received the first message based on the PoC protocol, and transmitting the attached data as well as the second message to the receiver side terminal from the PoC server.

According to this PoC data transmitting method, the attached data are distributed between the terminals by utilizing the message transmitted according to the PoC protocol.

Also, in the PoC data transmitting method of the present invention, an SIP message transmitted upon opening, changing, or closing a session can be utilized.

Also, in the PoC data transmitting method of the present invention, a talk start request (INVITE) message is used as a first message, and the talk start request (INVITE) message transferred from the PoC server is used as a second message.

Also, in the PoC data transmitting method of the present invention, a PoC start notice (REGISTER) message is used as the first message, and the talk start request (INVITE) message transferred from the PoC server is used as the second message.

Also, in the PoC data transmitting method of the present invention, a talk start response (INVITE response) message is used as the first message, and a presence information notice (NOTIFY) message is used as the second message.

Also, in the PoC data transmitting method of the present invention, a talk refuse notice (BUSY) or talk leave notice (BYE) message is used as the first message, and a presence information notice (NOTIFY) message is used as the second message.

Also, in the PoC data transmitting method of the present invention, a message that is transmitted to the PoC server from a terminal that wishes to take a floor is used as the first message, and a message that is transmitted from the PoC server to other servers to notify other servers that the PoC server took the floor is used as the second message.

Also, in the PoC data transmitting method of the present invention, the first message and the second message are transmitted by a RTCP packet, and an SDES packet containing the attached data is attached to the RTCP packet and transmitted.

Also, a mobile terminal of the present invention, includes an inputting portion for inputting or designating attached data; an attached message generating portion for attaching the attached data to a message that is transmitted to a PoC server based on a PoC protocol; and a displaying portion for displaying data attached to the message that is sent from the PoC server based on the PoC protocol.

This mobile terminal can realize the attached function in the PoC talking utilizing the attached data.

Also, a PoC server of the present invention, includes an attached message processing portion for analyzing attached data attached to a message that is sent from a transmitter side terminal based on the PoC protocol; and an attached message generating portion for attaching the attached data to a message that is transmitted to one or plural receiver side terminal based on the PoC protocol.

This PoC server can convey the distribution of the attached data between the terminals.

Also, a PoC talking system of the present invention in which a first message to which attached data is attached is transmitted from a transmitter side terminal to a PoC server based on a PoC protocol and a second message to which the attached data is attached is transmitted from the PoC server to a receiver side terminal based on the PoC protocol, wherein the transmitter side terminal transmits information indicating speakable terminals and attend-only terminals as the attached data in opening a session such that the speakable terminals and the attend-only terminals are designated by the transmitter side terminal.

According to this system, the user on the transmitter side can control the conversation between the groups.

Also, in the PoC talking system of the present invention, a terminal that refuses an attendance in a PoC talking or a terminal that leaves from the PoC talking transmits information of a reason for attendance refusal or a reason for leave as the attached data, and the terminal that received the attached data displays the reason for attendance refusal or the reason for leave.

According to this system, the terminal can inform the attendances of the detailed reason for attendance refusal or the detailed reason for leave.

Also, in the PoC talking system of the present invention, the transmitter side terminal transmits data of an acknowledge sound as the attached data in opening a session or in taking a floor, and the receiver side terminal uses the acknowledge sound transmitted from the transmitter side terminal as an acknowledge sound to acknowledge an operation of the transmitter side terminal.

According to this system, the attendance can decide the objective terminal only by hearing the acknowledge sound.

Also, in the PoC talking system of the present invention, the transmitter side terminal transmits a user icon or BGM data as the attached data in opening a session, and the receiver side terminal displays the user icon or the BGM transmitted from the transmitter side terminal when the transmitter side terminal takes a floor.

According to this system, the icon or the BGM corresponding to the user who is speaking now can be displayed on respective terminals of the attendances.

Also, in the PoC talking system of the present invention, the transmitter side terminal transmits an original message as the attached data in taking a floor, and the receiver side terminal displays the original message transmitted from the transmitter side terminal while the transmitter side terminal holds the floor.

According to this system, the original message can be used as the means for eliminating the failure to hear or the hearing amiss.

Also, in the PoC talking system of the present invention, the transmitter side terminal transmits an icon selected from a plurality of icons as the attached data in taking a floor, and the receiver side terminal displays the icon transmitted from the transmitter side terminal while the transmitter side terminal holds the floor.

According to this system, it is possible that a smile face icon is displayed on the receiver side terminal when a pleasure topic is being spoken, a sad face icon is displayed on the receiver side terminal when a sad topic is being spoken, and the like. Therefore, the variety of expression in the PoC talking can be increased.

Also, in the PoC talking system of the present invention, the transmitter side terminal transmits information of a floor release time as the attached data in taking a floor, and the receiver side terminal displays a countdown based on the information of the floor release time transmitted from the transmitter side terminal.

According to this system, the succeeding speaker can take the floor to speak immediately after an end of the preceding speaking, so that the smooth conversation can be carried on.

### Advantages of the Invention

According to the present invention, the attached data used to realize the PoC attached function can be distributed in conformity with the PoC protocol. Therefore, functions of PoC can be expanded not to impose a burden upon the user and also a breadth of expression in the PoC talking can be broadened.

### Brief Description of the Drawings

[FIG.1] A block diagram showing a configuration of a mobile terminal in embodiments of the present invention.
[FIG.2] A block diagram showing a configuration of a PoC server in embodiments of the present invention.
[FIG.3] An example of data configuration of a talk start request (INVITE) in a first embodiment of the present invention.
[FIG.4] An explanatory view of attached functions in the first embodiment of the present invention.
[FIG.5] Explanatory views of an attached function in a second embodiment of the present invention.
[FIG.6] Explanatory views of an attached function in a third embodiment of the present invention.
[FIG.7] Explanatory views of an attached function in a fourth embodiment of the present invention.
[FIG.8] Explanatory views of an attached function in a fifth embodiment of the present invention.
[FIG.9] Views showing a data structure of the floor take request (Floor Request).
[FIG.10] A view showing a data structure of the floor take request (Floor Request) in a sixth embodiment of the present invention.
[FIG.11] A view showing parameters of the floor take request (Floor Request) in FIG.10.
[FIG.12] A view showing a structure of the SDES packet.
[FIG.13] Explanatory views of an attached function in the sixth embodiment of the present invention.
[FIG.14] Explanatory views of an attached function in a seventh embodiment of the present invention.
[FIG.15] Explanatory views of an attached function in an eighth embodiment of the present invention.
[FIG.16] Explanatory views of an attached function in a tenth embodiment of the present invention.
[FIG.17] A conceptual view of the PoC system.
[FIG.18] A view showing sequences in opening the session in the PoC system.
[FIG.19] A view showing sequences in getting the floor in the PoC system.
[FIG.20] A view showing a screen of a terminal in PoC talking.

### Description of Reference Numerals and Signs

- 10: PoC server
- 11: receiving portion
- 12: attached message (data) processing portion
- 13: attached message (data) storing portion
- 14: attached message (data) generating portion
- 15: transmitting portion
- 20: terminal
- 21: terminal
- 22: terminal
- 23: terminal
- 31: transmitting/receiving portion
- 32: attached message (data) generating portion
- 33: inputting portion
- 34: attached message (data) holding portion
- 35: output device
- 36: displaying portion
- 37: speaker
- 40: cellular phone network

### Best Mode for Carrying Out the Invention

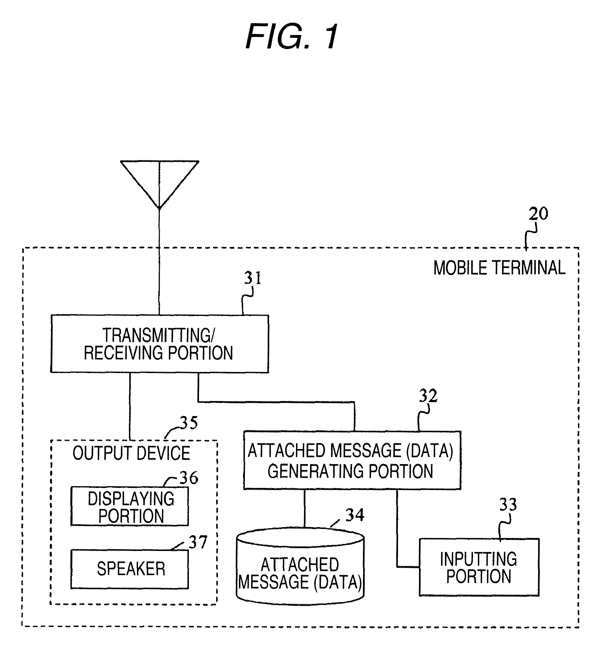

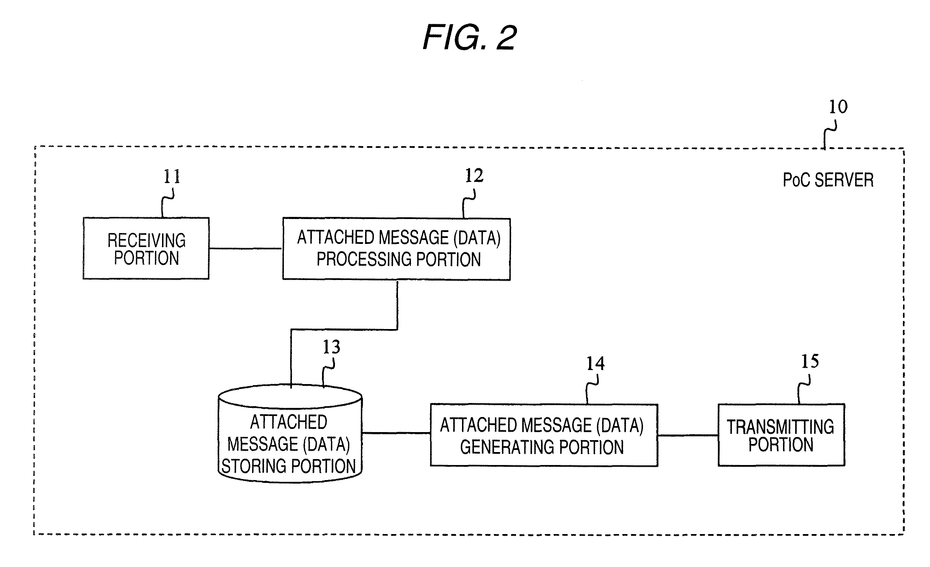

A configuration of a mobile terminal in embodiments of the present invention is shown in FIG.1, and a configuration of a PoC server is shown in FIG.2.

A mobile terminal 20 has new functions of attaching attached data or attached message to transmission information in addition to the conventional PoC functions, and executing the process based on the attached data or the attached message in the reception information. FIG.1 shows a configurative block associated with new functions of the mobile terminal 20, and includes an attached message (data) generating portion 32, an attached message (data) holding portion 34, a transmitting/ receiving portion 31, and an output device 35 (a displaying portion 36 and a speaker 37).

The attached data or the attached message or the designating information to designate them is input from an inputting portion 33.

The attached message (data) generating portion 32 generates the attached data or the attached message based on the input information from the inputting portion 33 or reads the attached data or the attached message from the attached message (data) holding portion 34, and attaches the data of the message to the transmission information to the PoC server 10.

The attached message (data) holding portion 34 holds the attached data or the attached message generated by the attached message (data) generating portion 32.

The transmitting/receiving portion 31 transmits the transmission information that the attached message (data) generating portion 32 formed to the PoC server 10, and outputs the reception information from the PoC server 10 to the output device 35.

The output device 35 contains the displaying portion 36 for displaying the attached data or the attached message attached to the reception information, and the speaker 37 for the attached data or the attached message as the voice data or converted into the voice data.

Also, the PoC server 10 has a new function of attaching the attached data or the attached message attached to the information sent from the mobile terminal 20 to transmission information sent to other mobile terminals, in addition to the conventional PoC controlling function. FIG.2 shows a configurative block diagram associated with the new function of the PoC server 10, and includes a receiving portion 11, an attached message (data) processing portion 12, an attached message (data) storing portion 13, an attached message (data) generating portion 14, and a transmitting portion 15.

The receiving portion 11 receives the transmission information from the mobile terminal 20.

The attached message (data) processing portion 12 analyzes the attached data or the attached message attached the reception information.

The attached message (data) storing portion 13 links the attached data or the attached message to data sender information, and holds them.

The attached message (data) generating portion 14 generates the transmission information to which the attached data or the attached message is attached and which is transmitted to the mobile terminal 20.

The transmitting portion 15 transmits the transmission information that the attached message (data) generating portion 14 generates to the mobile terminal 20.

A conceptual view of this PoC talking system is similar to that in FIG.17. The terminals 21, 22, 23 have the same configuration as that in FIG.1, and the PoC server 10 has a configuration in FIG.2.

Also, the communication procedures between the mobile terminal 20 and the PoC server 10 are similar to those in the sequences in the conventional system. But such communication procedures are different from the prior art in that the attached data or the attached message is attached to the information that is communicated there.

Next, contents of the attached data and the attached message, transmitting timings of the transmission information to which the attached data and the attached message are attached, and attached functions of the PoC talking realized by attaching the attached data and the attached message will be explained hereunder.

### (First Embodiment)

In a first embodiment of the present invention, an attached function of designating a speakable terminal and an attend-only terminal in the particular PoC talking will be explained hereunder.

For example, the user A in FIG.17 selects groups of the user B and the user C from the phone book of the terminal 21, and then designates the user B as the speakable terminal and the user C as the speakable terminal from the inputting portion 33. In response to this, the attached message (data) generating portion 32 generates the set information indicating that the terminal 22 of the user B is set as the speakable terminal and the terminal 23 of the user C is set as the unspeakable terminal, as the attached data and then stores such set information in the attached message (data) holding portion 34.

When the user A pushes a start button of the terminal 21, the attached message (data) generating portion 32 attaches the set information that is held by the attached message (data) holding portion 34 to the talk start request (INVITE) message ((4) in FIG.18) transmitted to the PoC server 10. The transmitting/receiving portion 31 transmits the talk start request (INVITE) message, to which the attached data is attached, to the PoC server 10.

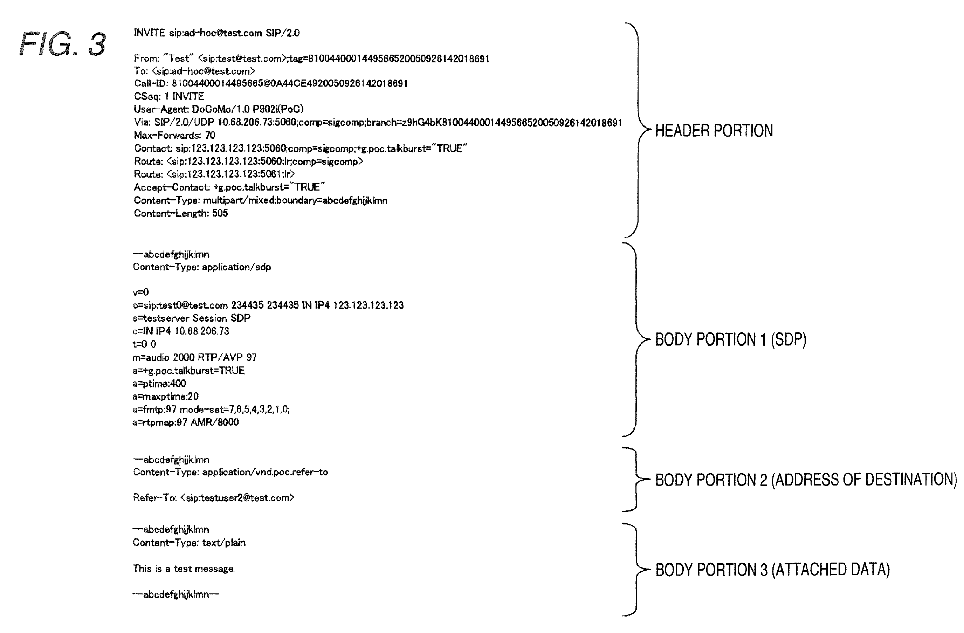

As described above, the SIP protocol is used in opening and closing the session in the PoC specification. As shown in FIG.3, the talk start request (INVITE) message as the SIP message is constructed by a header portion containing the information of a sender and a receiver, and a body portion of the message. The SIP message can transmit at a time plural types of messages in the form of "multi-part" like HTTP. The attached data generated by the attached message (data) generating portion 32 is described in the body portion of the talk start request (INVITE) message, and sent to the PoC server 10. In FIG.3, a body portion 3 represents the attached data.

In the PoC server 10 that received this talk start request (INVITE) message, the attached message (data) processing portion 12 analyzes the message, and records the set information to the effect "terminal 22: speakable terminal, terminal 23: unspeakable terminal" in the attached message (data) storing portion 13 as the attached data from the terminal 21.

As shown in FIG.18, the PoC server 10 when received the talk start request (INVITE) transfers the talk start request (INVITE) to the terminal 22 and the terminal 23. In this case, the attached message (data) generating portion 14 attaches the attached data being recorded in the attached message (data) storing portion 13 to the talk start request (INVITE) message sent to the terminal 22 and the terminal 23 ((5)(6) in FIG.18).

When the terminal 22 and the terminal 23 received the talk start request (INVITE) sent from the PoC server 10, the set information designated by the sender can be transmitted to the terminal 22 and the terminal 23.

The terminal 22 and the terminal 23 display the set information on the displaying portion 36, and also conducts the talk setting of the PoC talking, in which the terminal 21 acts as the sender at this time, based on the set information. Therefore, the terminal 23 can only attend the PoC talking, and thus displays a warning, for example, to inform the user C that he or she cannot speak in the PoC talking when the user C executes the operation to take the floor.

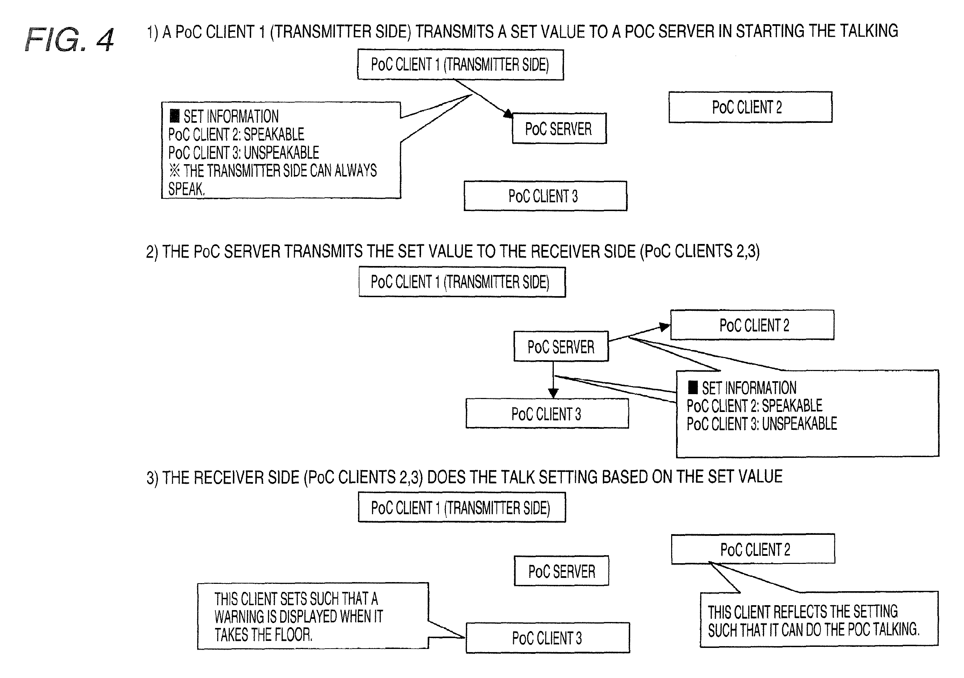

FIG.4 shows schematically procedures required until the attached functions of the PoC talking are set after the transfer of the attached data.

1) In starting the talking, the PoC client on the transmitter side transmits the set information about the PoC clients 2, 3 to the PoC server.
2) The PoC server transmits the set value to the PoC clients 2,3 on the receiver side.
3) The PoC clients 2,3 on the receiver side executes the talk setting based on the set value.
In this manner, the sender can control the speaking among the groups by setting the speakable terminal and the attend-only terminal.

Here, the case where the PoC client on the transmitter side attaches the attached data to the talk start request (INVITE) message ((4) in FIG.18) and then sends such request to the PoC server is explained. But the PoC client on the transmitter side may attach the attached data to the PoC start notice (REGISTER) message of the SIP message ((1) in FIG.18) and then sends such request to the PoC server. In this case, subsequent operations of the PoC server and the PoC client on the receiver side are not changed.

Also, up to now, the case where the PoC client on the transmitter side sets the speakable/unspeakable poistion of the PoC client on the receiver side as the set information is explained. But this embodiment is not limited to this. If the PoC client on the transmitter side attaches the various data such as "text", "image", "MIDI (Musical Instruments Digital Interface) data", and the like to the talk start request (INVITE) message or the PoC start notice (REGISTER) message by actively using the "multipart" of the SIP message, various settings that are available only in the PoC talking to be started can be implemented by the similar method.

### (Second Embodiment)

In a second embodiment of the present invention, an attached function of making it possible to notify of a detailed reason for attendance refusal or a reason for leave when the terminal refuses the attendance to the PoC talking or when the terminal leaves from the PoC talking will be explained hereunder.

In the PoC talking in the prior art, when the terminal refuses the talking, such terminal can notify a very rough reason for refusal such as "on drive", "timeout", or the like specified in the PoC specification. But such terminal cannot notify a detailed reason for attendance refusal such as "during moving by train", or the like, for example.

In the PoC talking system of this embodiment, for example, when the user C of the terminal 23 that receives the talk start request (INVITE) message ((6) in FIG.18) does not attends the PoC talking, such user C input a reason for talking refusal (e.g., "during moving by train") from the inputting portion 33 of the terminal 23 by character or voice. The attached message (data) generating portion 32 of the terminal 23 attaches the text data in which the reason for talking refusal is written or the voice data in which the reason for talking refusal is recorded to the talk refuse notice (BUSY) message ((11) in FIG.18) as the attached data. Also, the data can be attached to the body portion of the talk refuse notice (BUSY) message in the multipart format, like the talk start request (INVITE) message.

The transmitting/receiving portion 31 of the terminal 23 transmits the talk refuse notice to which the attached data is added to the PoC server 10.

In the PoC server 10 that received the talk refuse notice (BUSY) message, the attached message (data) processing portion 12 analyzes the message, and then stores the attached text data or the attached voice data in the attached message (data) storing portion 13 as the information received from the terminal 23.

As shown in FIG.18, the PoC server 10 that received the talk refuse notice (BUSY) transmits the presence information notice (NOTIFY) (12, 13) to the terminal 21 and the terminal 22 substantially in real time. In this case, the attached message (data) generating portion 14 attaches the text data or the voice data stored in the attached message (data) storing portion 13 to the presence information notice (NOTIFY).

Here, the presence information notice (NOTIFY) is transmitted from the PoC server 10 when the presence condition of the attendances is changed, and the presence information of the attendance is described in the presence information notice (NOTIFY) message in the XML format. Since the XML format is described on a text basis, the attached message (data) generating portion 14 describes the data in a coding system (any machine readable format) when the text data is attached to the presence information notice (NOTIFY) or text-encodes the data by BASE64 and the describes such data when binary data such as voice, image, etc. is attached.

The terminal 21 and the terminal 22 that received the presence information notice (NOTIFY) ((12)(13) in FIG.18) to which the attached data is attached extract the attached data in the XML, reproduces the detailed reason for attendance refusal of the terminal 23, and displays the reason on the displaying portion 36 or emits the reason from the speaker 37.

Also, when the attendance leaves the PoC talking group in the middle of talking, the talk leave notice (BYE) message is transmitted from the terminal of the attendance who is going to leave to the PoC server 10, and then the presence information notice (NOTIFY) informing the leave of the attendance is notified from the PoC server 10 to other attendances.

Here, suppose that the user C is going to leave the PoC talking group in attendance, the talk leave notice (BYE) message instead of the talk refuse notice (BUSY) message (11) in the sequences in FIG.18 is transmitted to the PoC server 10 from the terminal 23, and then the presence information notice (NOTIFY)(12) is transmitted to the terminal 21 from the PoC server 10 and also the presence information notice (NOTIFY)(13) is transmitted to the terminal 22 from the PoC server 10.

Therefore, in this PoC talking system, when the user C inputs the reason for leave or the leaving greeting (for example, "I leaves because a visitor comes", "bye-bye", or the like) by character or voice from the inputting portion 33 of the terminal 23, the attached data is attached to the talk leave notice (BYE) message in the SIP message according to the same procedures as the case of the talking refusal and then is attached to the presence information notice (NOTIFY)(12)(13). Then, the presence information notice is sent to the terminal 21 and the terminal 22 respectively, and then is displayed on the displaying portion 36 or emitted from the speaker 37 of the terminal 21 and the terminal 22.

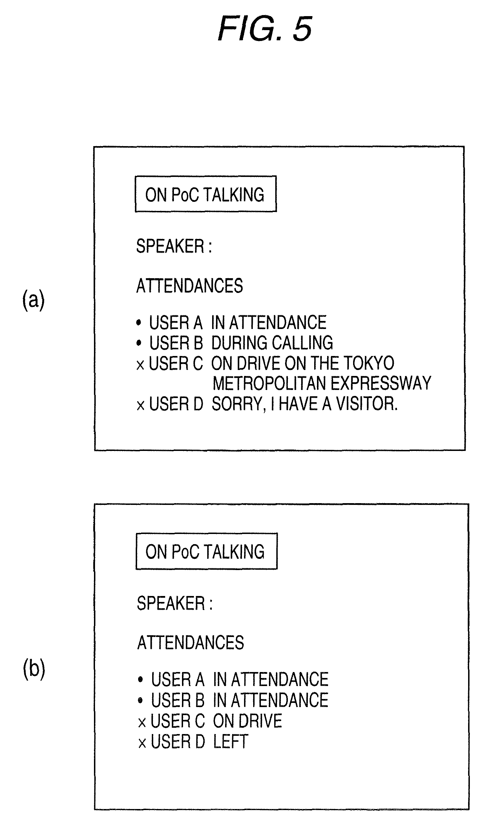

FIG.5(a) illustrates a display of the displaying portion 36 of the terminals 21 to 23 in this PoC talking system. Also, FIG.5(b) illustrates a display in the PoC talking system in the prior art by way of comparison.

The display "on drive" of the user C displayed on the screen in FIG.5(b) merely displays the message that is correlated previously with the response code of the SIP message in the PoC client. In the conventional specification, the user cannot change this message. Also, the "leave" of the user D is a message displayed when such user leaved the PoC talking, and similarly the user cannot change this message.

In contrast, in the PoC talking system of this embodiment, as shown in FIG.5(a), the user can edit freely the reason for talking refusal, the reason for leave, or the like and notifies of it. Therefore, the convenience of PoC in use can be improved.

Here, in the PoC talking system in which the PoC server informs the PoC client that lost the talking destination of the PoC talking end when one terminal terminates the talking by transmitting the BYE request message during the talking on a one-by-one basis and then the PoC client ends the PoC talking in response to this, the PoC server cannot transmit the presence information notice (NOTIFY) message to which the attached data is added to the PoC client.

However, in this case, the PoC server adds the body portion of the BYE request message with the attached data that the PoC server received from one terminal, as it is, to the PoC talking end notice, and transmits this notice to the terminal of the PoC client. As a result, the above problem can be solved.

### (Third Embodiment)

In a third embodiment of the present invention, an attached function of making it possible to identify an operated terminal owing to a difference in an acknowledge sound will be explained hereunder.

In the PoC talking system in the prior art, for example, when the user B takes the floor, the floor taken notice is transmitted from the PoC server 10 to the terminal 21 of the user A and the terminal 23 of the user C, as shown in FIG.19. The terminal 21 when received this generates the acknowledge sound set previously in the terminal 21, and the terminal 23 generates the acknowledge sound set previously in the terminal 23.

Therefore, in the terminal 21, since the same acknowledge sound is produced when the user B takes the floor and when the user C takes the floor, the user A cannot identify the floor take person only by the acknowledge sound and the user A must confirm the floor take person by looking at the display on the displaying portion.

In the PoC talking system of this embodiment, when the user B acquires the floor, the acknowledge sound set in the terminal 22 of the user B is produced in not only the terminal 22 but also the terminal 21 of the user A and the terminal 23 of the user C. Also, when the user C acquires the floor, the acknowledge sound set in the terminal 23 of the user C is produced in not only the terminal 23 but also the terminal 21 of the user A and the terminal 22 of the user B. Therefore, the user can specify the floor take person by the acknowledge sound.

Since the sound data of the acknowledge sound set in respective terminals 21, 22, 23 are exchanged between respective terminals, the terminal 21 of the user A as the transmitter attaches the sound data of the acknowledge sound being set (or the designated information of the acknowledge sound stored in the terminal) to the talk start request (INVITE) message ((4) in FIG.18) or the PoC start notice (REGISTER) message ((1) in FIG.18) as the attached data, and transmits the message to the PoC server 10. The PoC server 10 attaches the attached data to the talk start request (INVITE) message ((5) in FIG.18) sent to the terminal 22 and the talk start request (INVITE) message ((6) in FIG.18) sent to the terminal 23, and transmits the messages. Therefore, the terminal 22 and the terminal 23 can acquire the sound data of the acknowledge sound set in the terminal 21.

Meanwhile, the terminal 22 attaches the sound data of the acknowledge sound set in the terminal 22 to the talk start response (INVITE response) message ((7) in FIG.18) as the attached data, and transmits the message to the PoC server 10. The PoC server 10 attaches this attached data to the presence information notice (NOTIFY) (9) sent to the terminal 23 and the presence information notice (NOTIFY) (10) sent to the terminal 21, and transmits the notice. Therefore, the terminal 21 and the terminal 23 can acquire the sound data of the acknowledge sound set in the terminal 22.

Also, like the terminal 22, the terminal 23 of the user C that attends the PoC talking attaches the sound data of the acknowledge sound set in the terminal 23 to the talk start response (INVITE response) message as the attached data, and transmits the message to the PoC server 10. The PoC server 10 attaches this attached data to the presence information notice (NOTIFY) sent to the terminal 21 and the terminal 22, and transmits this notice. Therefore, the terminal 21 and the terminal 22 can acquire the sound data of the acknowledge sound set in the terminal 23.

Not only the acknowledge sound produced in taking the floor (take sound) but also the acknowledge sound produced in releasing the floor (release sound), the acknowledge sound produced in ring off (ring-off sound), and the like may be contained in this acknowledge sound.

When the terminal that acquired the sound data of the acknowledge sound set in other terminals receives the floor taken notice (Floor Taken)((23)(24) in FIG.19), or the floor release notice ((33)(34) in FIG.19), or the presence information notice (NOTIFY) for leaving from the PoC server 10, such terminal makes the acknowledge sound set in the floor take terminal, the floor release terminal, or the leave terminal. Therefore, the user can identify the operated terminal only by hearing the acknowledge sound.

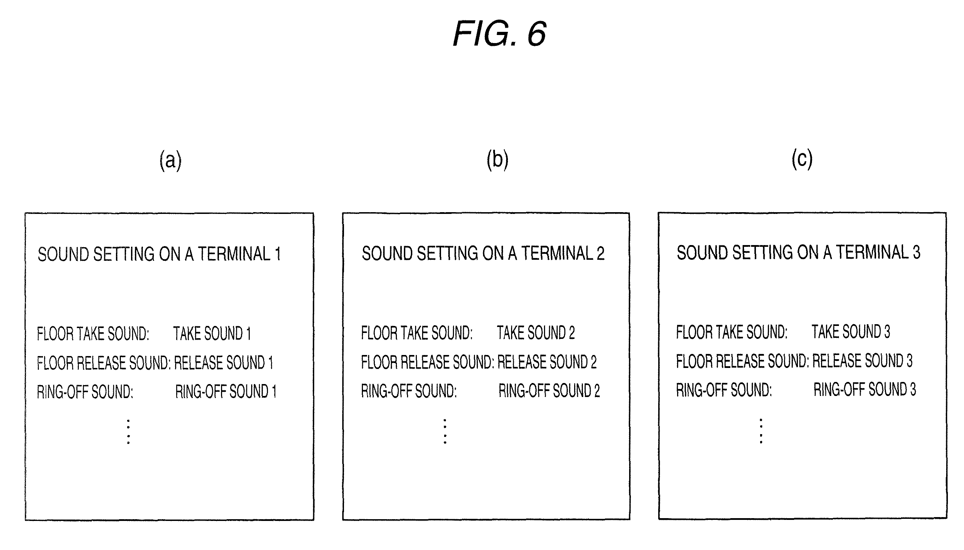

FIG.6 are views explaining the attached function of identifying the terminal based on an acknowledge sound.

Now, it is supposed that the terminal 1 sets a sound (a), the terminal 2 sets a sound (b), and the terminal 3 sets a sound (c).

In the PoC specification in the prior art, when the terminal 1 gets the floor, a "floor take sound 2" is produced in the terminal 2 and a "floor take sound 3" is produced in the terminal 3. Therefore, in order to confirm the person who takes the floor, there is no method except the user checks the screen during the PoC talking.

In contrast, in the PoC talking system of this embodiment, a "floor take sound 1" is produced in the terminal 2 and the terminal 3 when the terminal 1 gets the floor, while a "floor take sound 2" is produced in the terminal 1 and the terminal 3 when the terminal 2 gets the floor. Therefore, the user can know who acquired the floor, by listening this sound.

In this case, if the sound in the terminal of each user is correlated with the ringing sounds in other terminals and then the sound correlated with the floor take terminal is produced, it can be realized that the sound should be changed every speaker. However, according to this method, the setting becomes troublesome because the setting must be added every time when the new PoC talking object person is increased. In the PoC talking system of this embodiment, it can be decided only by the sound who is the speaker.

### (Fourth Embodiment)

In a fourth embodiment of the present invention, an attached function of displaying a user icon distributed from each user terminal to correlate it with the concerned user will be explained hereunder.

In the PoC talking system in the prior art, for example, when the user A set a user icon associated with the user B and a user icon associated with the user C in his or her own terminal 21, the user icon associated with the user B can be displayed on the screen of the terminal 21 when the user B takes the floor or the user icon associated with the user C can be displayed on the screen of the terminal 21 when the user C takes the floor.

In the PoC talking system of this embodiment, even when the operation to set the user icon associated with other users is not performed, icon data for the user B is distributed from the terminal 22 of the user B to the terminal 21 of the user A and also icon data for the user C is distributed from the terminal 23 of the user C. Similarly, icon data for the user A is distributed from the terminal 21 of the user A to the terminal 22 of the user B and also icon data for the user C is distributed from the terminal 23 of the user C. Also, icon data for the user A is distributed from the terminal 21 of the user A to the terminal 23 of the user C and also icon data for the user B is distributed from the terminal 22 of the user B.

The distribution of the icon data can be carried out by the similar procedures to the information of the acknowledge sound shown in the third embodiment.

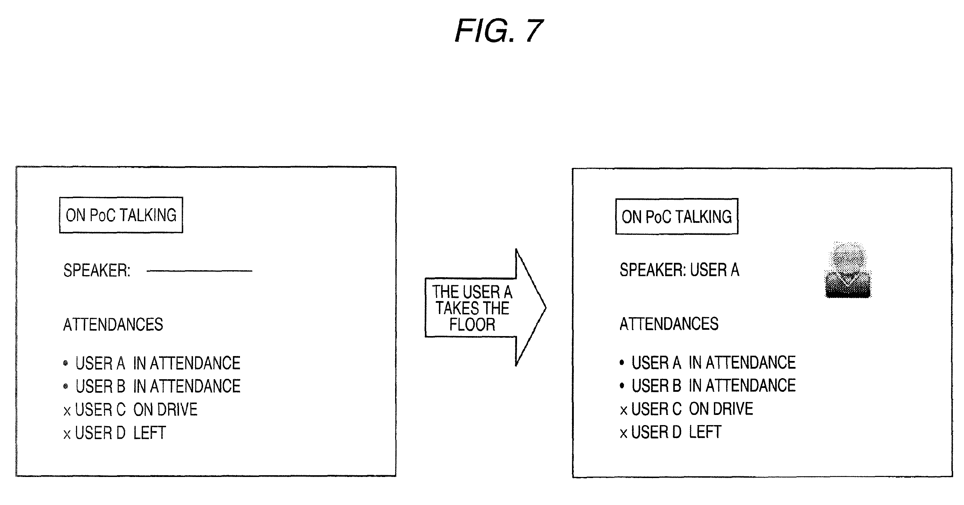

FIG.7 are views explaining an attached function of distributing the user icon. When the user A acquires the floor, an indication "Speaker: user A" and an icon of the user A are displayed on the screens of respective terminals.

In the PoC talking system in the prior art, in order to display the icon data of the person who takes the floor, a correspondence between the icon data and the user must be set in advance.

In the PoC talking system of this embodiment, the icon data can be transmitted in starting the PoC talking such that the icon can be displayed on the terminal in the PoC talking, and thus a time and labor required to prepare the correspondence in the terminal can be omitted.

Also, the distribution of the icon is explained herein. Similarly, MIDI music data of BGM that each user sets can be distributed between the terminals to change BGM every user who gets the floor in such a way that BGM set by the user A is sounded from the speakers 37 of respective terminals 21 to 23 when the user A gets the floor or BGM set by the user B is sounded when the user B gets the floor.

### (Fifth Embodiment)

In a fifth embodiment of the present invention, an attached function of doing the PoC talking by using functions supported by respective terminals only while exchanging a capability of the terminal of the talking attendance between the terminals mutually will be explained hereunder.

An upgrading of the terminal can be achieved by adding various attached functions, and the like shown in the first to fourth embodiments. However, terminal having various abilities such as the terminal that is compatible to all attached functions, the terminal that is compatible to a part of the functions, and the like are contained in the terminals used actually. There is a difference in version between the terminals.

In the PoC talking system of this embodiment, respective terminals of the attendances in the talking exchange their ability information in starting the PoC talking, and the function that is not supported by any terminal is turned OFF in executing the PoC talking.

The exchange of the ability information data can be carried out by the similar procedures to the information of the acknowledge sound shown in the third embodiment.

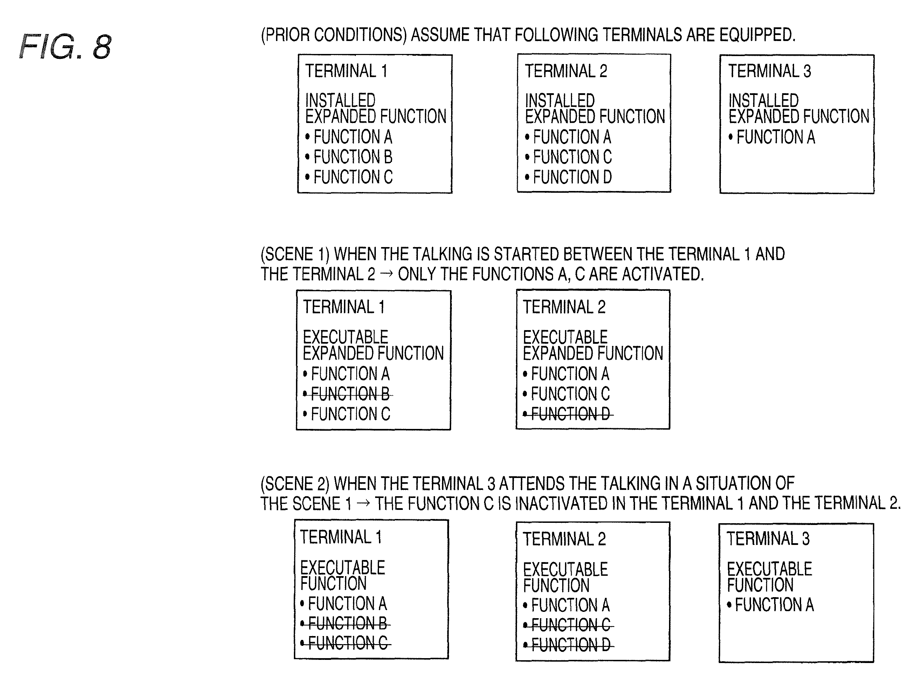

FIG.8 are views explaining an attached function of exchanging their capabilities of respective terminals.

It is supposed that a function A, a function B, and a function C are installed into the terminal 1, a function A, a function C, and a function D are installed into the terminal 2, and only a function A is installed into the terminal 3.

(Scene 1) When the talking is started between the terminal 1 and the terminal 2, only the functions A, C that both terminals possess are activated.
(Scene 2) When the terminal 3 attends the talking in a situation of the Scene 1, only the function A that the terminal 1, the terminal 2, and the terminal 3 possess is activated.

In this manner, since the attendances in the PoC talking exchange the functions that the PoC clients possess in starting the PoC talking and also the function that is not supported by the attendances in the PoC talking is turned OFF, a difference in versions of the PoC clients can be eliminated. As a result, even if an upgrading of the PoC client is performed, the upward compatibility can be maintained and also the talking between the old and new PoC clients can be guaranteed.

### (Sixth Embodiment)

In a sixth embodiment of the present invention, an attached function of distributing an original message of a speaker who intends to take the floor to respective terminals will be explained hereunder.

In this PoC talking system, the user A who tries to notify other users of the original message (for example, the phone number given to the attendance, or the like) at a time of talking inputs the original message from the inputting portion 33 of user's own terminal 21, and then pushes the talk button of the terminal 21 to acquire the floor.

As shown in FIG.19, the floor take request (Floor Request) (21) to which the original message is attached is transmitted to the PoC server 10 from the terminal 21 by this operation.

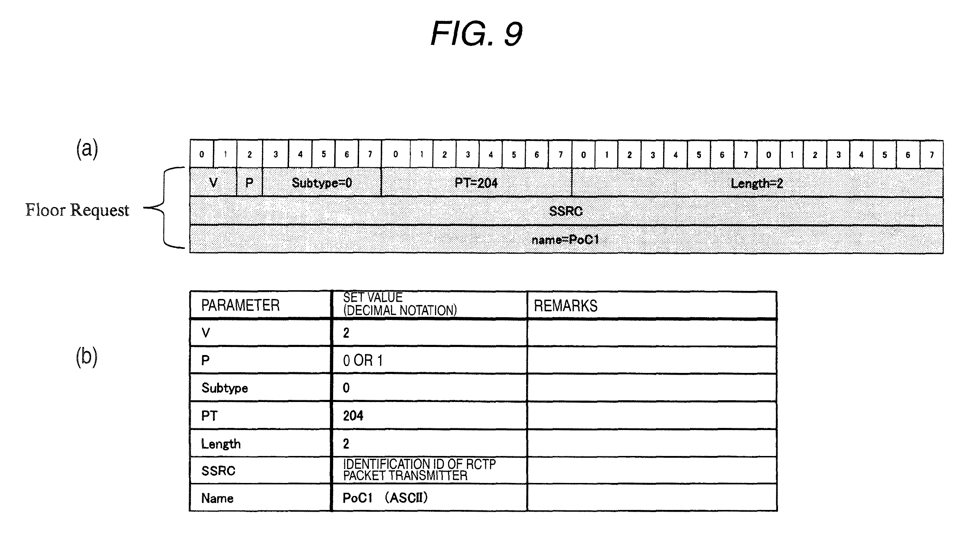

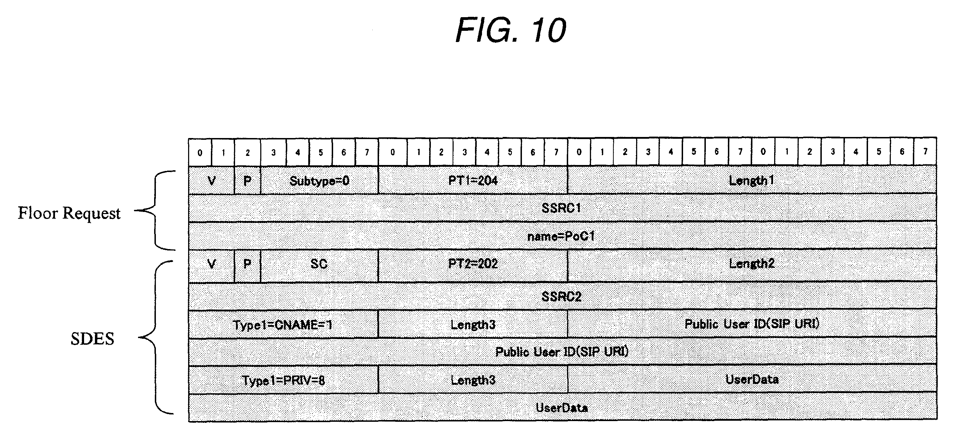

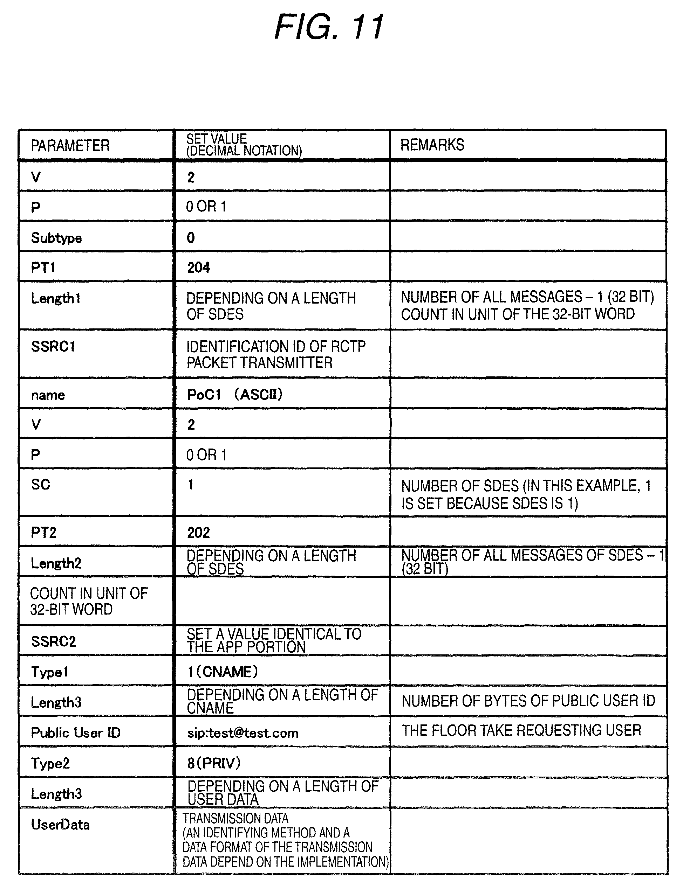

As described above, the floor take request is made by using RTCP in the PoC specification. The RTCP packet of the floor take request (Floor Request) has a data structure shown in FIG.9(a), and respective parameters are set as shown in FIG.9(b). In this case, in this PoC talking system, as shown in FIG.10, an SDES (Source Description) packet is attached to the RCTP packet of the floor take request (Floor Request), and then transmitted the the PoC server 10 in the form of "composite RCTP packet". Respective parameters of this composite RCTP packet are shown in FIG.11.

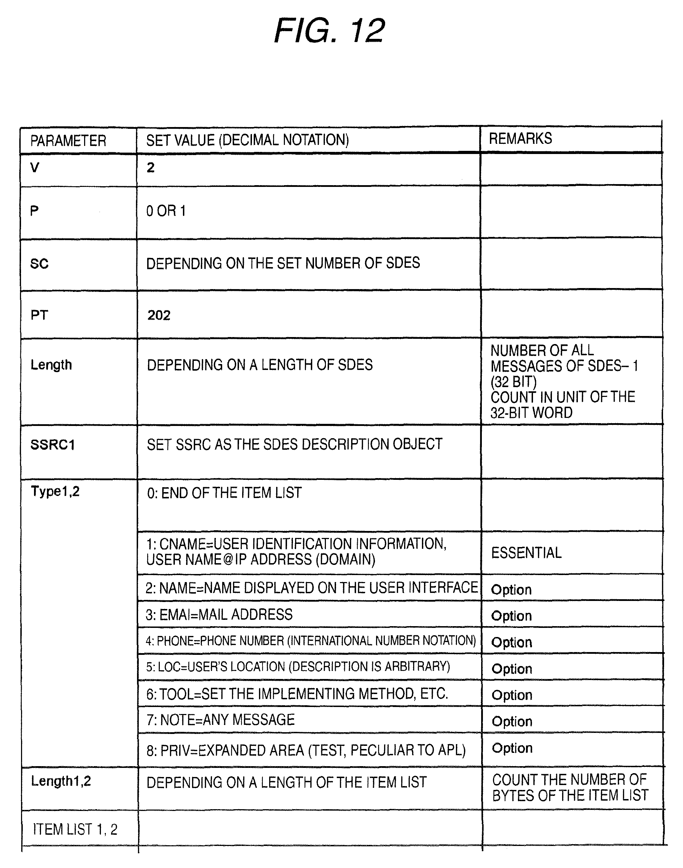

The SDES packet is used to notify of the mail address and the phone number of the attendance, and has a structure shown in FIG.12. The SDES packet has a PRIV (Private) area in which the application can be defined independently.

The attached message (data) generating portion 32 writes the original message input from the inputting portion 33 into the PRIV area of the SDES packet, and then attaches this SDES packet to the RTCP packet of the floor take request (Floor Request). The floor take request (Floor Request) obtained in this manner is transmitted from the transmitting/receiving portion 31 to the PoC server 10.

In the PoC server 10 that received this floor take request (Floor Request), the attached message (data) processing portion 12 analyzes the received data, and then records the SDES information that is attached to the floor take request (Floor Request) in the attached message (data) storing portion 13.

As shown in FIG.19, the PoC server 10 that received the floor take request (Floor Request) transmits the floor taken notice (Floor Taken) to other terminals. In this event, the attached message (data) generating portion 14 attaches the SDES recorded in the attached message (data) storing portion 13 to the floor taken notice (Floor Taken)((23),(24) in FIG.19) sent to the terminal 22 and the terminal 23, so that the "composite RTCP packet" consisting of the floor taken notice (Floor Taken) and the SDES information is transmitted to the terminal 22 and the terminal 23.

When the terminal 22 and the terminal 23 receive the floor taken notice (Floor Taken) sent from the PoC server 10, the original message of the sender can be transferred to the terminal 22 and the terminal 23. The terminal 22 and the terminal 23 display this original message on the displaying portion 36.

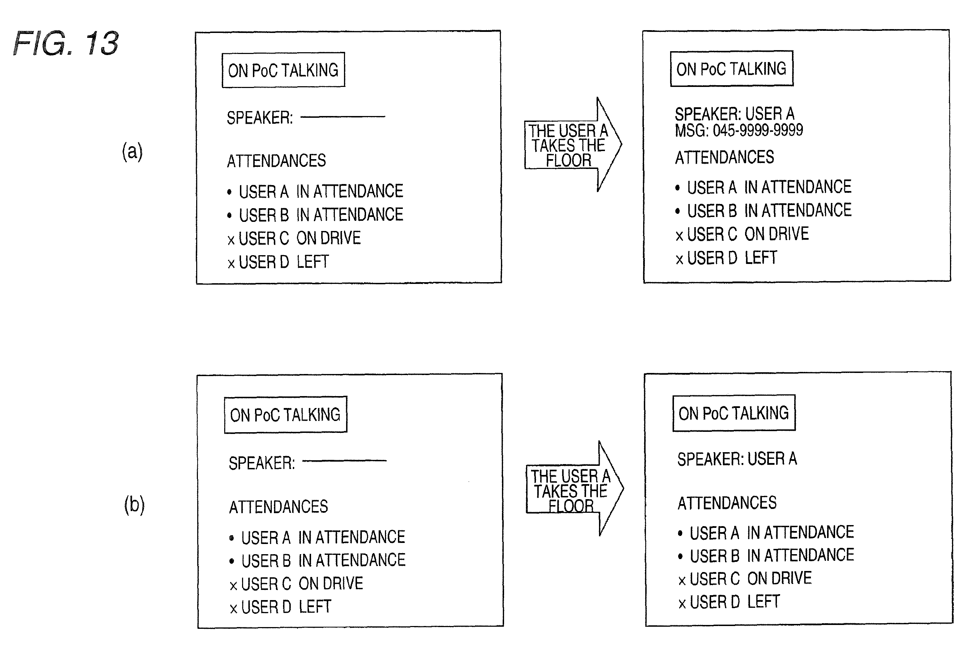

FIG.13(a) illustrates a display of the displaying portion 36 of the terminals 22, 23 in this PoC talking system. Also, FIG.13(b) illustrates a display in the PoC talking system in the prior art by way of comparison.

In the case of FIG.13(b), a means for transferring the information to the attendance from the speaker is the voice only. Therefore, even when the user A pronounces "Please call 045-9999-9999", mistakes such as failure to hear, hearing amiss, and the like are caused.

In the case of FIG.13(a), the user can transmit/display the text data simultaneously in taking the floor. Therefore, if the user A pronounces "Please call me at the phone number 045-9999-9999 sent to you just now", mistakes such as failure to hear, hearing amiss, and the like can be prevented. As a result, the communication over the PoC can be made more smooth.

### (Seventh Embodiment)

In a seventh embodiment of the present invention, an attached function of distributing an icon that expressing a speaker's feeling in speaking to respective terminals will be explained hereunder.

Respective terminals 21 to 23 in this PoC talking system hold beforehand plural icons representing feelings such as a smile face, a sad face, etc. in the attached message (data) holding means 34.

For example, when the user A speaks the pleasant topic, such user designates the icon with a smile face from the inputting portion 33 of the terminal 21 in terms of the number and then pushes the talk button of the terminal 21.

The attached message (data) generating portion 32 of the terminal 21 reads the icon data designated by the inputting portion 33 from the attached message (data) holding means 34, and writes the icon data into the PRIV area of the SDES packet.

Like the original message in the sixth embodiment, this SDES packet is attached to the floor take request (Floor Request) packet and transmitted to the PoC server 10, and also is attached to the floor taken notice (Floor Taken) packet and transmitted to the terminals 22, 23 from the PoC server 10. The terminal 22 and the terminal 23 display the icon sent by the SDES packet on the displaying portion 36.

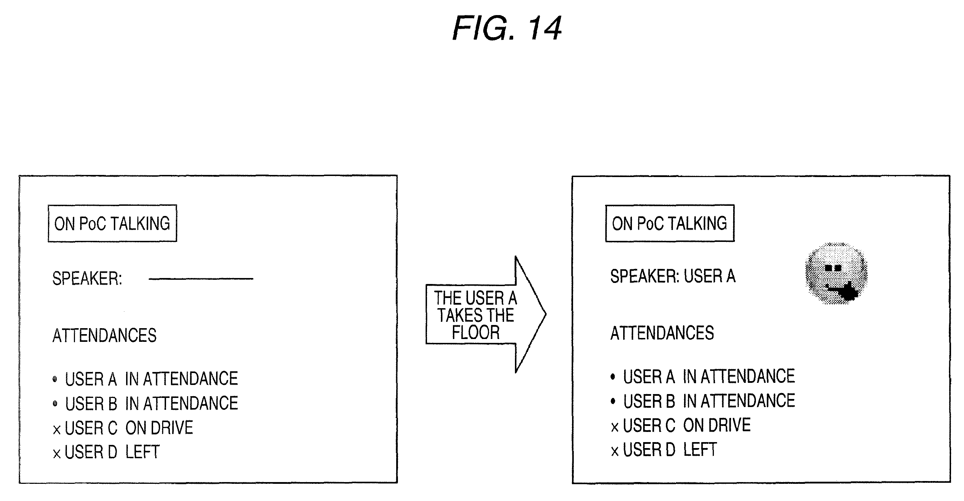

FIG.14 shows such a situation that, when the user A obtains the floor by pointing a "funny" icon, such icon is transmitted to the terminals of all attendances and displayed on the screen of each terminal. The variety of expression on the PoC talking can be increased by displaying such icon.

### (Eighth Embodiment)

In an eighth embodiment of the present invention, an attached function of distributing a photo taken in attendance in the PoC talking to respective terminals will be explained hereunder.

Respective terminals 21 to 23 in this PoC talking system have a camera function. When the user takes a photograph and pushes the talk button of the terminal, the picked-up image can be transmitted to other terminals. The procedures of transmitting the image data in this case are similar to the original message in the sixth embodiment or the icon data in the seventh embodiment.

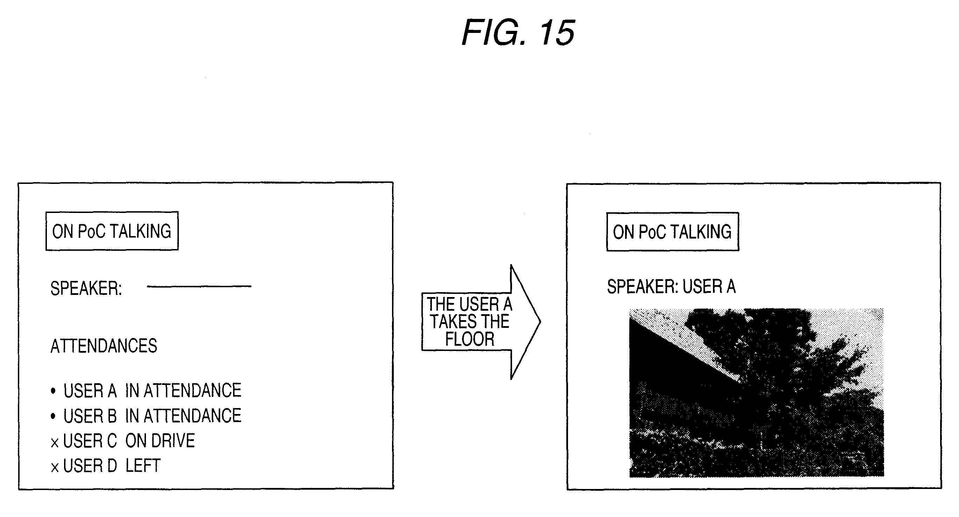

FIG.15 illustrates the screen of the receiver side terminal, on which the image is displayed when the user A takes a photo and then gets the floor to transmit the image. In this manner, the variety of expression in the PoC talking can be increased because the photo picked up by the user during the PoC talking can be displayed.

### (Ninth Embodiment)

In a ninth embodiment of the present invention, an attached function of notifying respective terminals of a floor release time in taking the floor will be explained hereunder.

In this PoC talking system, the user who intends to acquire the floor inputs a scheduled floor release time from the inputting portion 33 of the terminal, and then pushes the talk button of the terminal.

This input floor release time is transmitted to other user's terminal through the same procedures as the original message in the sixth embodiment.

The terminal that received the floor release time displays a countdown until the floor is terminated, and makes a sound at a point of time when the count is 0. In this PoC talking system, the seceding speaker can get the floor and speak as soon as the preceding speaking is ended, and thus a smooth conversation can be carried on.

### (Tenth Embodiment)

In a tenth embodiment of the present invention, an attached function of changing an acknowledge sound of the receiver terminal in response to an operation executed in taking the floor will be explained hereunder.

In this PoC talking system, for example, when the user A does not take the particular operation from the inputting portion 33 but pushes the talk button to acquire the floor, the terminals 22, 23 that received the floor taken notice (Floor Taken) from the PoC server 10 changes the display of the speaker into the user A, and respective terminals produce the ordinarily used acknowledge sound.

In contrast, when the user A designates the acknowledge sound from the inputting portion 33 of the terminal 21 and then pushes the talk button, the attached message (data) generating portion 32 of the terminal 21 reads the sound data of the acknowledge sound designated by the inputting portion 33 from the attached message (data) 34 and writes the data into the PRIV area of the SDES packet. The terminal 21 attaches this SDES packet to the floor take request (Floor Request), and transmits the packet to the PoC server 10.

Like the original message in the sixth embodiment, the sound data of the acknowledge sound is attached to the floor taken notice (Floor Taken), and then transmitted to the terminal 22 and the terminal 23 from the PoC server 10.

The terminal 22 and the terminal 23 that received the floor taken notice (Floor Taken) changes the display of the speaker into the user A, and reproduces the attached sound data of the acknowledge sound.

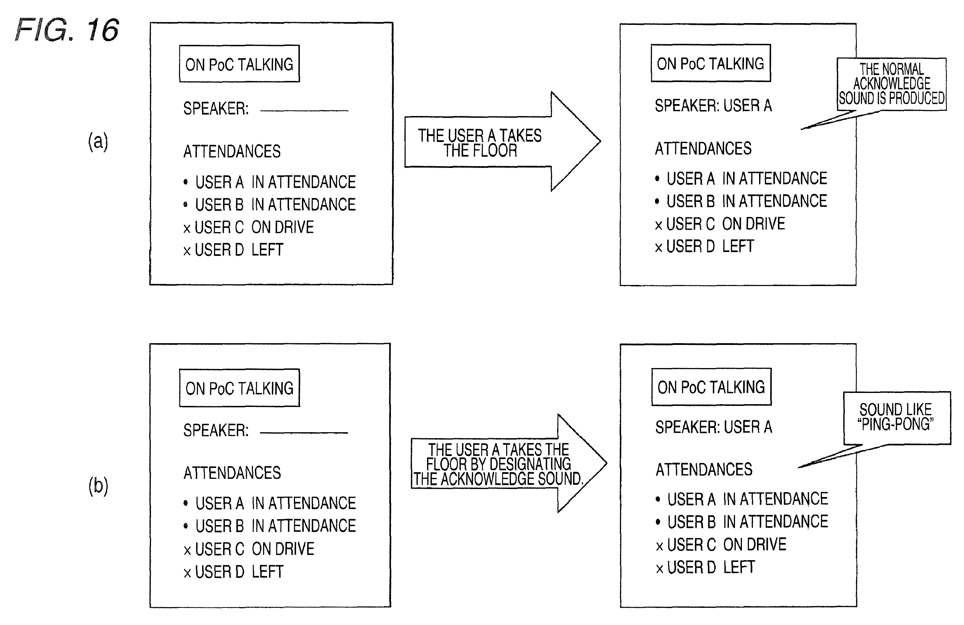

FIG.16 are views explaining this attached function. FIG.16(a) shows the case where the user A takes the floor not to designate the acknowledge sound. At this time, acknowledge sound data is not sent to the receiver side, and the normally used floor take sound is produced on the receiver side terminal.

FIG.16(b) shows the case where the user A performs the operation to designate the acknowledge sound and then takes the floor. At this time, acknowledge sound data is sent to the receiver side, and the sound like "Ping-pong" is reproduced on the receiver side terminal based on this data. According to such function, the variety of expression in the PoC talking can be increased.

With the above, various embodiments of the present invention are explained, but the present invention is not limited to the matters illustrated in the above embodiments. The present invention is susceptible to changes and adaptations made by those skilled in the art based on the description of the specification and the well-known technology, and these matters are contained in a scope in which a protection is claimed.
The present invention is explained in detail with reference to particular embodiments as above. But it is apparent for those skilled in the art that various variations and modifications can be applied without departing from a spirit and a scope of the present invention
This application is based upon Japanese Patent Application No.2006-019411 filed on January 27, 2006; the entire contents of which are incorporated herein by reference.

### Industrial Applicability

The present invention is applied to the PoC system, the device therein, or the data transmitting method in the PoC system to make the expansion of functions in the PoC system possible, and is extremely useful for implementing the convenient PoC system.

## Claims

1. A PoC data transmitting method, comprising:
a first step of attaching attached data to a first message that is transmitted to a PoC server from a transmitter side terminal based on a PoC protocol, and transmitting the attached data as well as the first message to the PoC server from the transmitter side terminal; and
a second step of attaching the attached data to a second message that is transmitted to one or plural receiver side terminals from the PoC server that received the first message based on the PoC protocol, and transmitting the attached data as well as the second message to the receiver side terminal from the PoC server.

2. The PoC data transmitting method according to claim 1, wherein the first message and the second message are a message that is transmitted in opening, changing, or closing a session based on the PoC protocol.

3. The PoC data transmitting method according to claim 2, wherein the first message and the second message are an SIP message.

4. The PoC data transmitting method according to claim 3, wherein the first message is a talk start request (INVITE) message, and the second message is the talk start request (INVITE) message transferred from the PoC server.

5. The PoC data transmitting method according to claim 3, wherein the first message is a PoC start notice (REGISTER) message, and the second message is the talk start request (INVITE) message transferred from the PoC server.

6. The PoC data transmitting method according to claim 3, wherein the first message is a talk start response (INVITE response) message, and the second message is a presence information notice (NOTIFY) message.

7. The PoC data transmitting method according to claim 3, wherein the first message is a talk refuse notice (BUSY) or talk leave notice (BYE) message, and the second message is a presence information notice (NOTIFY) message.

8. The PoC data transmitting method according to claim 1, wherein the first message is a message that is transmitted to the PoC server from a terminal that wishes to take a floor, and the second message is a message that is transmitted from the PoC server to other servers to notify other servers that the PoC server took the floor.

9. The PoC data transmitting method according to claim 8, wherein the first message and the second message are transmitted by a RTCP packet, and an SDES packet containing the attached data is attached to the RTCP packet and transmitted.

10. A mobile terminal, comprising:
an inputting portion which inputs or designates attached data;
an attached message generating portion which attaches the attached data to a message that is transmitted to a PoC server based on a PoC protocol; and
a displaying portion which displays data attached to the message that is sent from the PoC server based on the PoC protocol.

11. A PoC server, comprising:
an attached message processing portion which analyzes attached data attached to a message that is sent from a transmitter side terminal based on a PoC protocol; and
an attached message generating portion which attaches the attached data to a message that is transmitted to one or plural receiver side terminals based on the PoC protocol.

12. A PoC talking system in which a first message to which attached data is attached is transmitted from a transmitter side terminal to a PoC server based on a PoC protocol and a second message to which the attached data is attached is transmitted from the PoC server to a receiver side terminal based on the PoC protocol,
wherein the transmitter side terminal transmits information indicating a speakable terminal and an attend-only terminal as the attached data in opening a session such that the speakable terminal and the attend-only terminal are designated by the transmitter side terminal.

13. A PoC talking system in which a first message to which attached data is attached is transmitted from a transmitter side terminal to a PoC server based on a PoC protocol and a second message to which the attached data is attached is transmitted from the PoC server to a receiver side terminal based on the PoC protocol,
wherein a terminal that refuses an attendance in a PoC talking or a terminal that leaves from the PoC talking transmits information of a reason for attendance refusal or a reason for leave as the attached data, and the terminal that received the attached data displays the reason for attendance refusal or the reason for leave.

14. A PoC talking system in which a first message to which attached data is attached is transmitted from a transmitter side terminal to a PoC server based on a PoC protocol and a second message to which the attached data is attached is transmitted from the PoC server to a receiver side terminal based on the PoC protocol,
wherein the transmitter side terminal transmits data of an acknowledge sound as the attached data in opening a session or in taking a floor, and the receiver side terminal uses the acknowledge sound transmitted from the transmitter side terminal as an acknowledge sound to acknowledge an operation of the transmitter side terminal.

15. A PoC talking system in which a first message to which attached data is attached is transmitted from a transmitter side terminal to a PoC server based on a PoC protocol and a second message to which the attached data is attached is transmitted from the PoC server to a receiver side terminal based on the PoC protocol,
wherein the transmitter side terminal transmits a user icon or BGM data as the attached data in opening a session, and the receiver side terminal displays the user icon or the BGM transmitted from the transmitter side terminal when the transmitter side terminal takes a floor.

16. A PoC talking system in which a first message to which attached data is attached is transmitted from a transmitter side terminal to a PoC server based on a PoC protocol and a second message to which the attached data is attached is transmitted from the PoC server to a receiver side terminal based on the PoC protocol,
wherein the transmitter side terminal transmits an original message as the attached data in taking a floor, and the receiver side terminal displays the original message transmitted from the transmitter side terminal while the transmitter side terminal holds the floor.

17. A PoC talking system in which a first message to which attached data is attached is transmitted from a transmitter side terminal to a PoC server based on a PoC protocol and a second message to which the attached data is attached is transmitted from the PoC server to a receiver side terminal based on the PoC protocol,
wherein the transmitter side terminal transmits an icon selected from a plurality of icons as the attached data in taking a floor, and the receiver side terminal displays the icon transmitted from the transmitter side terminal while the transmitter side terminal holds the floor.

18. A PoC talking system in which a first message to which attached data is attached is transmitted from a transmitter side terminal to a PoC server based on a PoC protocol and a second message to which the attached data is attached is transmitted from the PoC server to a receiver side terminal based on the PoC protocol,
wherein the transmitter side terminal transmits information of a floor release time as the attached data in taking a floor, and the receiver side terminal displays a countdown based on the information of the floor release time transmitted from the transmitter side terminal.
